# EUROPÄISCHE PATENTSCHRIFT

(11) **EP 2 209 596 B1**
(45) Veröffentlichungstag und Bekanntmachung des Hinweises auf die Patenterteilung: **03.08.2011**
(21) Anmeldenummer: 08848979.4
(22) Anmeldetag: 22.10.2008
(51) Int. Cl.: B25J 9/16

(54) **INDUSTRIEROBOTER UND VERFAHREN ZUM STEUERN DER BEWEGUNG EINES INDUSTRIEROBOTERS**
INDUSTRIAL ROBOT AND METHOD FOR CONTROLLING THE MOVEMENT OF AN INDUSTRIAL ROBOT
ROBOT INDUSTRIEL, ET PROCÉDÉ DE COMMANDE DU MOUVEMENT D'UN ROBOT INDUSTRIEL

(30) Priorität: 15.11.2007 DE 102007056117
(43) Veröffentlichungstag der Anmeldung: 28.07.2010
(73) Patentinhaber: KUKA Laboratories GmbH, 86165 Augsburg (DE)
(72) Erfinder: WEISS, Martin, 86459 Margertshausen (DE); HÜTTENHOFER, Manfred, 86405 Meitingen (DE); HAGENAUER, Andreas, 86316 Friedberg (DE); WIEDEMANN, Günther, 86368 Gersthofen (DE)
(74) Vertreter: Patentanwälte Funk & Böss GbR
(86) Internationale Anmeldenummer: PCT/EP2008/064294
(87) Internationale Veröffentlichungsnummer: WO 2009/062826

(56) Entgegenhaltungen:
- EP-A- 1 724 676
- WO-A-03/057428
- WO-A-2006/056349
- US-A1- 2006 004 479
- DOOLEY G: "FORTH for robot control" ROBOTICS AGE USA, Bd. 7, Nr. 9, September 1985 (1985-09), Seiten 7-8, XP008104540 ISSN: 0197-1905
- MCCURDY C: "FORTH PROGRAMMING LANGUAGE FOR CONTROL SYSTEMS: POTENTIAL ADVANTAGES." MEASUREMENT AND CONTROL 1987 MAY, Bd. 20, Nr. 5, Mai 1987 (1987-05), Seiten 45-48, XP008104541

## Beschreibung

Die Erfindung betrifft einen Industrieroboter und ein Verfahren zum Steuern der Bewegung eines Industrieroboters.

Industrieroboter im Allgemeinen sind Handhabungsmaschinen, die zur selbsttätigen Handhabung von Objekten mit zweckdienlichen Werkzeugen ausgerüstet und bezüglich mehrerer Bewegungsachsen, insbesondere hinsichtlich Orientierung, Position und Arbeitsablauf programmierbar sind. Industrieroboter umfassen im Allgemeinen einen Roboterarm, eine Steuerungsvorrichtung und gegebenenfalls einen Effektor, der zum Beispiel als ein Greifer zum Greifen eines Werkzeugs ausgebildet sein kann und am Roboterarm befestigt ist oder an diesem befestig werden kann. Der Roboterarm stellt im Wesentlichen den beweglichen Teil des Industrieroboters dar und weist mehrere Achsen auf, die zum Beispiel mittels elektrischer Antriebe von der Steuerungsvorrichtung für die Bewegung des Industrieroboters angesteuert werden, damit beispielsweise der Effektor auf einer vorbestimmten Bahn bewegt wird.

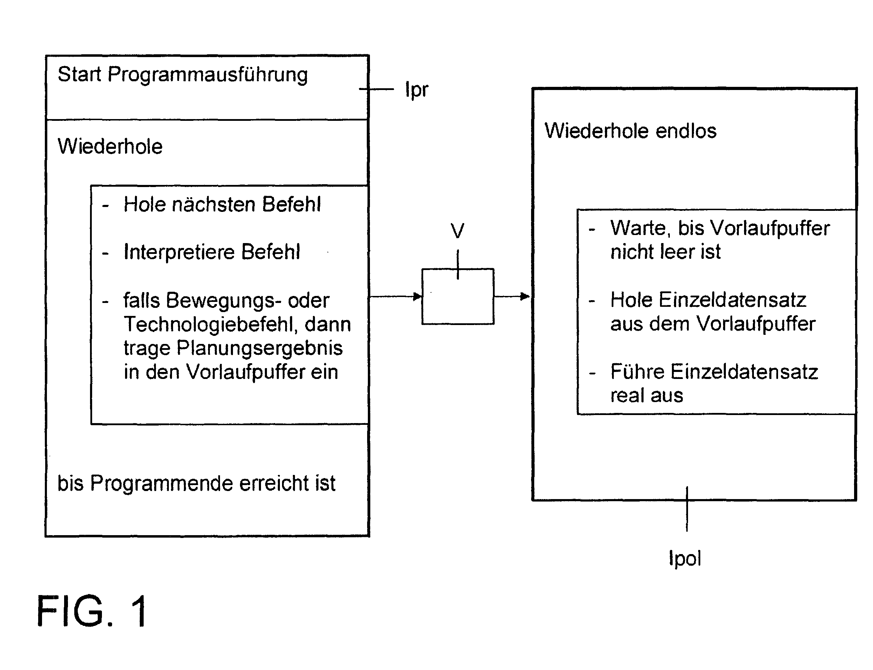

Konventionelle Verfahren zum Steuern der Bewegung des Industrieroboters beruhen darauf, dass die Steuerungsvorrichtung des Industrieroboters dessen zu durchlaufende Bahn, wie mittels eines in der Fig. 1 dargestellten Flussdiagramms plant.

Für die Planung erstellt ein Interpreter Ipr der Steuerungsvorrichtung bzw. eines auf dieser laufenden Rechenprogramms aus z.B. in einem Speicher der Steuerungsvorrichtung abgelegten, der Bahn zugeordneten programmierten Punkten Geometrie-und Geschwindigkeitsprofile umfassende Einzeldatensätze insbesondere während der Bewegung des Industrieroboters. Den einzelnen Einzeldatensätzen ist jeweils eine einzelne Bewegungsanweisung für den Industrieroboter zugeordnet, deren Gesamtheit die Bewegung des Industrieroboters beim Durchlaufen der Bahn bestimmt. Die vom Interpreter Ipr geplanten Einzeldatensätze werden dann in einen Puffer beschränkter Länge ("Vorlaufpuffer" V) der Steuerungsvorrichtung eingetragen ("Vorlauf"). Einzelne Technologiebefehle, die auch als technologische Anweisungen oder Technologieanweisungen bezeichnet werden, werden ebenfalls samt zeitlichem und/oder geometrischem Bezug zur Bahn in den Vorlaufpuffer eingetragen. Unter technologischen Anweisungen versteht man u.A. das eventuell bahnbezogene Setzen oder Löschen von analogen oder digitalen Ausgängen des Industrieroboters, geschwindigkeitsproportionale Analogausgabe, geometrisches oder thermisches Pendeln etc. Die einzelnen programmierten Punkte wurden z.B. mittels direkter oder indirekter Programmierverfahren vorab ermittelt.

Die geplanten Einzeldatensätze werden während der Bewegung des Industrieroboters von einem sogenannten Interpolator Ipol der Steuerungsvorrichtung aus dem Vorlaufpuffer V abgefahren, um insbesondere Lagesollwerte für die Bewegung des Industrieroboters zu erhalten ("Hauptlauf"). Die Errechnung der Lagesollwerte aus den Einzeldatensätzen erfolgt nach festen Rechenregeln und wird als "Interpolation" bezeichnet. Die Interpolation und die Planung der Einzeldatensätze stellen unterschiedliche Tasks dar. Multitasking der Steuerungsvorrichtung sorgt dafür, dass im Rahmen des "Vorlaufs" weitere Einzeldatensätze quasi-parallel zur Interpolation geplant werden können.

Eine Planung der Bewegung im "Vorlauf" ist u.A. erforderlich, um ein Überschleifen der Bewegung bzw. eine Berechnung einer Spline-Kontur aus den Einzeldatensätzen (Bewegungsanweisungen) durchzuführen. Um eine der aktuell ausgeführten Teilbewegung der Bewegung des Industrieroboters nachfolgende Teilbewegung berechnen zu können, benötigt man neben dem der aktuellen Teilbewegung des Industrieroboters zugeordneten Einzeldatensatzes (Bewegungsanweisung) wenigstens einen dem aktuellen Einzeldatensatz nachfolgenden geplanten Einzeldatensatz einschließlich der Überschleifverbindung zum aktuell vom Industrieroboter ausgeführten Einzeldatensatz. Ein Überschleifen wird dadurch realisiert, indem mehrere Einzeldatensätze (Bewegungsanweisungen) voraus geplant werden.

Für die Planung eines Einzeldatensatzes benötigt man in der Regel eine relativ kurze Zeit, bei Verwendung heutiger Steuerungsvorrichtungen in der Größenordnung von unter 30 ms. Die reale Ausführungsdauer der dem Einzeldatensatz zugeordneten Teilbewegung am Industrieroboter ist dagegen in der Regel deutlich länger, z.B. im Bereich von mehreren 100 ms bis zu mehreren Sekunden.

Die Berechnung bzw. Planung der Bewegung eines nicht näher dargestellten Industrieroboters aufgrund eines konventionellen Verfahrens kann wie folgt veranschaulicht werden

| | | |
|---|---|---|
| | | · |
| | | · |
| | | · |
| | | LIN P1 C_DIS |
| (HL) | ⇒ | LIN P2 C_DIS |
| | | LIN P3 C_DIS |
| | | LIN P4 C_DIS |
| (VL) | ⇒ | LIN P5 C_DIS |
| | | LIN P6 C_DIS |
| | | LIN P7 C_DIS |

wobei Bewegungen mit einer Kennung "C_DIS" für "Überschleifen" gekennzeichnet werden.

Aktuell für das Beispiel einer konventionellen Steuerung führt ein Industrieroboter während seines Hauptlaufs/Interpolation (abgekürzt: HL) eine Teilbewegung seiner Gesamtbewegung aus, die einem Einzeldatensatz (Bewegungsanweisung) LIN P2 C_DIS zugeordnet ist. Um z.B. Antriebe des Industrieroboters für die dem Einzeldatensatz LIN P2 D_DIS zugeordnete Bewegungsanweisung real umzusetzen, erstellt der Interpolator Ipol aus diesem Einzeldatensatz die entsprechenden Kommandos für die Antriebe.

Die der aktuellen Teilbewegung vorangegangene Teilbewegung, die dem Einzeldatensatz LIN P1 C_DIS zugeordnet ist, hat der Industrieroboter bereits beendet.

Beginnt der Industrieroboter seine Bewegung auf der dem Einzeldatensatz LIN P3 C_DIS zugeordneten Teilbewegung, dann entnimmt der Vorlauf aus dem Vorlaufpuffer V den im Rahmen des Vorlaufs (abgekürzt: VL) geplanten Einzeldatensatz LIN P3 C_DIS und die Planung kann an die jetzt freie Stelle des Vorlaufpuffers den neu geplanten Einzeldatensatz LIN P6 C_DIS einfügen.

Ein Vorteil der konventionellen Planung ist es, dass der Interpolator Ipol die reale Ausführung z.B. einer überschliffenen Kontur schon relativ frühzeitig beginnen kann, selbst wenn die Kontur der Bahn, auf der der Industrieroboter bewegt wird, als solche noch nicht komplett bekannt ist.

Die Rechenleistung der Steuerungsvorrichtung kann jedoch auch für andere Tasks verwendet werden, so dass die Auslastung der Steuerungsvorrichtung nicht deterministisch ist. Dies ist vor Allem dann der Fall, wenn die Steuerungsvorrichtung zwischen den Bewegungsanweisungen weitere, insbesondere potenziell rechenintensive Operationen durchführt. Dies kann beispielhaft wie folgt veranschaulicht werden

| | | |
|---|---|---|
| | | · |
| | | · |
| | | · |
| | | LIN P1 C_DIS |
| (HL) | ⇒ | LIN P2 C_DIS |
| | | LIN P3 C_DIS |
| | | LIN P4 C_DIS |
| (VL) | ⇒ | FOR I = 1 TO N DO CALL Subroutine ENDFOR |
| | | LIN P5 C_DIS |
| | | LIN P6 C_DIS |
| | | LIN P7 C_DIS |
| | | · |
| | | · |
| | | · |

In diesem Fall führt die Steuerungsvorrichtung eine Task aus, die dem Befehl "FOR I = 1 TO N DO CALL Subroutine ENDFOR" zugeordnet ist. In einem solchen Fall ist es möglich, dass der Vorlauf eventuell für eine relativ lange Zeit nicht das nächste Bewegungskommando (programmierter Punkt) erhält. Dadurch ist es nicht deterministisch, wie viele Einzeldatensätze der Vorlauf vorauseilen kann. Dies kann sich von einem Ausführungszyklus des Prozesses zum anderen unterscheiden.

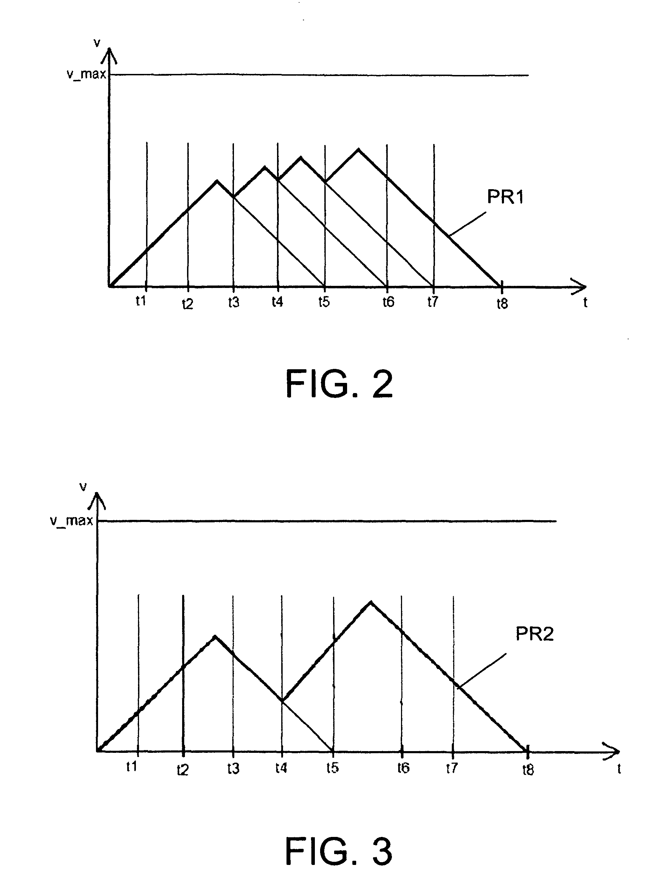

Dadurch können sich folgende Nachteile ergeben:
1. Das Geschwindigkeitsprofil ist abhängig von der Prozessorauslastung, d.h. der Auslastung der Steuerungsvorrichtung. Der Industrieroboter muss aber immer auf dem im Vorlauf sichtbaren Restweg bahntreu stoppen können. Je nach für die Planung verfügbarer Rechenzeit variiert der sichtbare Restweg. Von der Auslastung der Steuerungsvorrichtung abhängige Geschwindigkeitsprofile PR1, PR2 für dieselbe Bahnkontur sind in den Figuren 2 und 3 dargestellt. Das in der Fig. 2 gezeigte Geschwindigkeitsprofil PR1 ist einer relativ geringen Auslastung und das in der Fig. 3 gezeigte Geschwindigkeitsprofil PR2 ist einer relativ hohen Auslastung der Steuerungsvorrichtung zugeordnet.
2. Der Industrieroboter bewegt sich nicht notwendigerweise mit der zeitoptimalen Geschwindigkeit: Wenn die gesamte Kontur von Genauhalt zu Genauhalt bekannt wäre, könnte sich der Industrieroboter mit einer höheren Geschwindigkeit, inklusive jederzeitiger Stoppmöglichkeit, bewegen als mit der durch die Länge des Vorlaufpuffers beschränkten Vorausschau.
3. Die geometrische Bahn, auf der sich der Industrieroboter bewegt, ist abhängig von der Prozessorauslastung, d.h. der Auslastung der Steuerungsvorrichtung: Je nachdem, ob Überschleifen möglich ist oder nicht, wird Genauhalt gefahren oder nicht. Zunächst berechnet die Steuerung nämlich immer die Genauhaltbahn, auf der gegebenenfalls auch ein Notaus durchgeführt wird.
4. In bestimmten Betriebsarten, etwa "Einzelschrittverfahren" oder "Rückwärtsfahren", oder nach Satzanwahl, werden die programmierten einzelne Punkte der Bahn angefahren, da aus Gründen einfacher Implementierung der Compiler / Interpreter der Steuerungsvorrichtung nur eine Bewegungsanweisung ausführt, nicht jedoch eine Umgebung um diesen eventuell überschliffenen Bewegungsdatensatz analysiert.
5. Bei "Notaus" bewegt sich der Industrieroboter eventuell auf einer anderen Bahn als im ungestörten Programmbetrieb (potenziell "Stopp auf Bahn" zum Genauhaltpunkt).

Wegen der Nachteilen 1, 3 ist die Prozessgeometrie und die Prozessgeschwindigkeit nicht deterministisch.

Wegen der Nachteilen 3, 4, 5 muss um die Bahn und programmierten Punkte ein Sicherheitsabstand eingehalten werden, da sowohl die Genauhalt- als auch die Überschleifbahn kollisionsfrei fahrbar sein muss.

Die WO 2006/056349 A1 offenbart ein Verfahren, bei dem ein Interpreter/Compiler einer Robotersteuerung dazu ausgebildet ist, Bewegungen des Roboters in eine Bewegungsvorausplanung für den Roboter umzusetzen.

Die Aufgabe der Erfindung ist es daher, ein Verfahren zum Steuern der Bewegung eines Industrieroboters anzugeben, das eine Vorraussetzung für eine potenziell höhere Bewegungsgeschwindigkeit des Industrieroboters ermöglicht.

Die Aufgabe der Erfindung wird gelöst durch ein Verfahren zum Steuern der Bewegung eines Industrieroboters, aufweisend folgende Verfahrensschritte:
a) Abfragen einer für die Steuerung eines Industrieroboters vorgesehenen Anweisung,
b) Erzeugen einer interpretierten Anweisung durch Interpretieren der abgefragten Anweisung mittels eines Interpreters,
c) Speichern der interpretierten Anweisung in einen Zwischenspeicher, wobei das Speichern der interpretierten Anweisung angefangen wird, wenn ein Schlüsselwort entdeckt wurde,
d) Wiederholen der Schritte a) bis c) bis ein weiteres Schlüsselwort entdeckt wird,
e) Erzeugen eines Datensatzes aus den im Zwischenspeicher gespeicherten interpretierten Anweisungen, wobei der Datensatz eine Information über zumindest eine Teilbahn einer Bahn aufweist, auf der sich der Industrieroboter bewegen soll, und für den Datensatz nur Anweisungen mit einem reduzierten Befehlssatz verwendet werden, der keine Kontrollstrukturen umfasst.
f) Laden des Datensatzes in einen Pufferspeicher und
g) Abfragen des im Pufferspeicher gespeicherten Datensatzes und Interpolieren des aus dem Pufferspeicher (abgefragten Datensatzes mittels eines Interpolators, um den Industrieroboter auf der Teilbahn zu bewegen.

Die Erfindung stellt außerdem einen Industrieroboter mit einer Steuerungsvorrichtung bereit, die das erfindungsgemäße Verfahren ausführt.

In einem weiteren Aspekt der Erfindung wird ein Computerprogrammprodukt bereitgestellt, das direkt in einen Speicher einer Steuerungsvorrichtung eines Industrieroboters ladbar ist und einen Softwarecode aufweist, mit dem das erfindungsgemäße Verfahren ausgeführt wird, wenn das Computerprogrammprodukt auf der Steuerungsvorrichtung des Industrieroboters läuft.

Im Gegensatz zu konventionellen Planungsverfahren, wie dem in der Einleitung beschriebenen Planungsverfahren, werden gemäß dem erfindungsgemäßen Verfahrens mehrere Anweisungen zu einem Abschnitt zusammensetzt, der im Zwischenspeicher als Datensatz abgelegt wird. Der Zwischenspeicher ist z.B. Teil der Steuerungsvorrichtung des Industrieroboters und der Abschnitt wird z.B. durch eine Klammer mit Schlüsselwörtern gekennzeichnet.

Für die Steuerung der Bewegung des Industrieroboters werden erfindungsgemäß die einzelnen Anweisungen, insbesondere einzelne Bewegungs- und Technologieanweisungen z.B. aus einem Speicher der Steuerungsvorrichtung abgerufen und mittels des Interpreters interpretiert. Es werden alle folgenden Anweisungen bis zum Erreichen des weiteren Schlüsselworts vom Interpreter der verwendeten Roboterprogrammiersprache interpretiert. Der Beginn des Interpretierens der ersten Anweisung bzw. das Anfangen des Speicherns der interpretierten Anweisungen beginnt, wenn z.B. der Interpreter das Schlüsselwort entdeckt.

Das Ergebnis der Interpretation der einzelnen Anweisungen, wird aber nicht sofort in einen Pufferspeicher (Vorlaufpuffer) der Steuerungsvorrichtung eingetragen, sondern in den Zwischenspeicher. Der Zwischenspeicher dient somit der Sammlung der interpretierten Anweisungen, kann aber insbesondere dasselbe Datenformat wie Geometrie-, Geschwindigkeits- und Technologiesätze im Speicherpuffer aufweisen. Im Gegensatz zu ansonsten üblichen Geschwindigkeitsprofilen kann der Zwischenspeicher auch Bereiche mit Geschwindigkeit "0" aufweisen, z.B. aufgrund von Warteanweisungen. Der Pufferspeicher wiederum kann insbesondere eine vorbestimmte Länge aufweisen.

Sobald das weitere Schlüsselwort erreicht ist, wird der Inhalt des Zwischenspeichers als der Datensatz in den Pufferspeicher übertragen.

Für den Datensatz werden nur Anweisungen mit einem reduzierten Befehlssatz verwendet, der keine Kontrollstrukturen bzw. Kontrollanweisungen umfasst.

Gemäß einer Ausführungsform des erfindungsgemäßen Verfahrens werden für den Datensatz keine Kontrollstrukturen, die Endlosschleifen generieren könnten (z.B. keine rekursiven Funktionsaufrufe, nur sogenannte "FOR"-Schleifen mit festem Ende, keine "while / repeat" Schleifen) verwendet. Dadurch wird verhindert, dass die Berechnung des Datensatzes eine unendliche Zeitdauer erfordert.

Auch ist es möglich, für den Datensatz keine sensorgeführten Anweisungen oder keine Anweisungen, die eine zeitlich unbestimmte Dauer aufweisen, wie beispielsweise Warteanweisungen, aufgrund derer der Interpreter wartet, bis ein entsprechendes Signal gesetzt ist, zu erlauben.

Gemäß einer weiteren Ausführungsform des erfindungsgemäßen Verfahrens weist der Datensatz wenigstens Bewegungsanweisupgen, Technologieanweisungen und zeitlich spezifizierte Warteanweisungen auf. Bewegungsanweisungen sind z.B. Punkt zu Punkt (PTP) Bewegungen, lineare (LIN) Bewegungsanweisungen, Kreisbogenbewegung (CIRC) Anweisungen oder SPLINE-Anweisungen.

Unter Technologieanweisungen versteht man das eventuelle bahnbezogene Setzen und/oder Löschen von analogen und digitalen Ausgängen, geschwindigkeitsproportionale Analogausgabe, geometrisches oder thermisches Pendeln.

Nach einer weiteren Ausführungsform des erfindungsgemäßen Verfahrens ist der Datensatz frei von einer Schachtelung von Abschnitten.

Somit plant der Interpreter gemäß dem erfindungsgemäßen Verfahrens die Teilbahn mittels des dem Datensatz zugeordneten Abschnitts des als eine elementare Anweisung, äquivalent einer einzigen, bisher bekannten Bewegungs- oder Technologieanweisung. Beim konventionellen Vorlaufkonzept entspricht der Abschnitt genau einer einzigen Bewegungs- oder Technologieanweisung.

Aufgrund des erfindungsgemäßen Verfahrens steigt zwar die Planungszeit, da der Interpolator später startet, dafür ist das Ergebnis jedoch deterministisch, wodurch potenziell höhere Bewegungsgeschwindigkeiten des Industrieroboters möglich sind.

Beim konventionellen Planungsverfahren wird lediglich ein, einer einzigen Bewegungs- oder Technologieanweisung als ein Element (Einzeldatensatz) betrachtet. Bei einem Vorlauf von nur einem einzigen Einzeldatensatz entspricht der komplette Abschnitt gemäß dem erfindungsgemäßen Verfahrens nur einem Eintrag im Pufferspeicher (Vorlaufpuffer), der intern aber aus mehreren Kommandos aufgebaut wurde. Bei gleicher Länge des Pufferspeichers (Vorlaufpuffers) kann so eine größere Vorschau in realem Weg realisiert werden. Das Zeitverhalten innerhalb dieses Abschnitts ist deterministisch, weil die geplante Bewegung, bestehend aus mehreren Teilbewegungen (Teilbahnen) erst vollständig geplant wird, und dann dem Hauptlauf (Interpolator) übergeben wird.

Nach einer Ausführungsformen des erfindungsgemäßen Verfahrens umfasst der Datensatz eine Information über die gesamte Bahn oder weist dieses zusätzlich Wiederholen der Schritte a) bis g) auf, um einen weiteren Datensatz zu Erzeugen, der eine Information über eine weitere Teilbahn der Bahn umfasst, wobei die weitere Teilbahn der Teilbahn nachfolgt.

Der Abschnitt (Datensatz) kann beispielsweise mehrere überschliffene oder nicht überschliffene Bewegungen oder auch Spline-Bewegungen aufweisen.

Die Realisierung, d.h. die Programmierung des Datensatzes (Abschnitts) geht über die bekannten Blöcke als logische Gruppierung bei höheren Programmiersprachen wie C, C++ "{ .. }" oder Pascal (BEGIN .. END) oder auch Unterprogrammaufrufe hinaus, auch wenn das erfindungsgemäße Konzept syntaktisch diesen ähnlich ist und der Abschnitt z.B. durch Schlüsselwörter, wie "BEGIN" "END" definiert wird. Denn ein Block in der Programmiersprache "C" beispielsweise teilt einem Compiler nur mit, dass eine Folge von mehreren Statements, wie z.B. ein Statement im Kontrollfluss, betrachtet werden soll. Über das Zeitverhalten wird keine Aussage gemacht. Das erfindungsgemäße Verfahren spezifiziert dagegen ein deterministisches Hauptlaufverhalten (Interpolation).

Das erfindungsgemäße Verfahren entspricht eher einem Task-Lock in einem Multitasking-System. In einer Multitasking-Umgebung ist eine Berechnung z.B. durch eine Interrupt-Anweisung nicht unterbrechbar (zumindest aus Sicht des Interpolators).

Das erfindungsgemäße Verfahren schafft demnach eine Vorraussetzung für eine höhere (deterministische) Bahngeschwindigkeit des Industrieroboters. Aus Sicherheitsgründen ist es nämlich in der Regel notwendig, dass aufgrund einer Bewegungsplanung nur Bewegungen erzeugt werden, die auf dem geplanten Restweg, also dem Teil der Bahn, auf der sich der Industrieroboter noch bewegen soll, zum nächsten Genauhalt zum Halt kommen können, da z.B. eine Notaus-Reaktion erforderlich sein könnte bzw. keine weiteren Bewegungen mehr folgen könnten. Die maximale Geschwindigkeit der Bewegung des Industrieroboters ist also über die im Vorlauf verfügbare Vorschau an Restweg beschränkt.

Die Fig. 2 zeigt dieses Verhalten für das in der Einleitung bereits beschriebene konventionelle Verfahren anhand des Geschwindigkeitsprofils PR1: Immer wenn der Vorlauf einen weiteren Einzeldatensatz geplant und damit den sichtbaren Restweg verlängert hat, kann die Geschwindigkeit in der Planung erhöht werden. Diese höhere Geschwindigkeit ist aber abhängig von der Prozessorauslastung der Steuerungsvorrichtung.

Mittels des erfindungsgemäßen Verfahrens wird der Planung der Bewegung auf einfache Weise ein längerer Prozessweg als eine Einheit mitgeteilt, so dass die maximale auf diesem Gesamtweg zulässige Geschwindigkeit geplant werden kann.

Nach einer Ausführungsform des erfindungsgemäßen Verfahrens ist es deshalb vorgesehen, dass der Datensatz aufgrund der im Zwischenspeicher gespeicherten interpretierten Anweisungen eine Information über eine ortsabhängige Geschwindigkeit aufweist, mit der sich der Industrieroboter auf der dem Datensatz zugeordneten Teilbahn bewegen soll. Alternativ oder zusätzlich kann es auch vorgesehen sein, dass der Datensatz aufgrund der im Zwischenspeicher gespeicherten interpretierten Anweisungen eine Information über eine zeitbasierte Bewegung ausweist, mit der sich der Industrieroboter auf der dem Datensatz zugeordneten Teilbahn bewegen soll.

Das erfindungsgemäße Verfahren erlaubt auch die Planung bzw. Bewegung der gleichen Kontur in allen Betriebsarten. Bei konventionellen Steuerungen mit Vorlauf- / Hauptlaufkonzept wird im Einzelschrittmodus, beispielsweise zum Test eines Programms, oder beim Rückwärtsfahren, oder bei Satzanwahl auch bei Punkten, die im Programmbetrieb überschliffen werden, der Genauhaltpunkt angefahren. Es ist nämlich aufgrund möglicher Kontrollstrukturen, berechneter Punkte und der für ein Überschleifen erforderlichen Analyse einer Umgebung schwierig, die Kontur des Programmbetriebs zu bestimmen. Beispielsweise ist die Kontur einer Spline-Bahn um einen Punkt je nach verwendeter Ordnung des Splines erst bei Kenntnis mehrerer vorausgehender und folgender Punkte bekannt. Dies ist mit gängigen Compilern und Interpretern schwierig zu realisieren, da eine in ihrer Größe nicht bekannte Umgebung eines Kommandos analysiert werden muss.

Mit dem erfindungsgemäßen Verfahren wird die gesamte Kontur bzw. eine Teilkontur als ein Datensatz aufgefasst und ist als Ganzes verfügbar. Dadurch kann relativ einfach auch bei den Funktionen "Einzelschritt", "Programmbetrieb", "Rückwärtsfahren", "Satzanwahl" die Programmkontur gefahren werden. Somit ist es möglich, dass bei einer Überschleif- oder Spline-Bahn stets die programmierten Punkte durchfahren werden.

Dadurch können kleinere Sicherheitsabstände um die programmierten oder programmierten Punkte gewählt werden.

Bei überschliffenen Konturen ist in der Regel nicht bekannt, wie lange diese Kontur von Genauhalt bis Genauhalt in Weg und Zeit dauert, da sie eben stückweise zusammengesetzt wird. Es gibt aber Anwendungen, bei denen der Prozess eine bestimmte Zeit dauern muss. Beispiele solcher Prozesse sind:
1. Bei Applikationen wie Ausschäumen muss eine Form entlang einer Kontur mit einer vorgegebenen Menge Schaum gefüllt werden. Die Dosierung des Schaums ist in der Regel nicht steuerbar, sondern die Rate R = Schaummenge pro Zeit ist konstant. Um also eine gewünschte Menge M einzubringen, muss die Kontur in der Zeit T = M/R abgefahren werden. Kann die Verfahrzeit nicht vorgegeben werden, muss zuerst in einem Lernlauf die Verfahrzeit für die Kontur ermittelt, und dann entsprechend die Geschwindigkeit angepasst werden.
   Ist die Kontur aufgrund des erfindungsgemäßen Verfahrens bekannt, kann die Steuerungsvorrichtung des Industrieroboters zunächst die Kontur mit der Vorgabe "zeitoptimal" planen, und die resultierende Zeit Tₒₚₜ dann verwendet, um etwa durch Zeitskalierung das Geschwindigkeitsprofil auf die gewünschte Zeit T zu strecken (sofern Tₒₚₜ < T, sonst ist die Aufgabe nicht lösbar). Das bedeutet, dass die zeitoptimale Planung eine Bahnbeschreibung als Funktion fₒₚₜ: [0, Tₒₚₜ]-> Rⁿ liefert, tatsächlich wird aber eine Funktion f: [0, T] -> Rⁿ mit fₒₚₜ(t) = f(t * Tₒₚₜ/T) interpoliert. Die Zeitvorgabe kann sich auch nur auf Teil-Abschnitte oder Zwischenpunkte beziehen.
2. Vorgabe des Wärmeeintrags entlang der Kontur, ähnlich Schaumeintrag. Die Vorgabe der Zeit, die ein Entertainment-Roboter benötigt, um sich synchron zu Video- oder Audio-Signalen zu bewegen.

Es ist auch möglich, einzelne Abschnitte als einen Bewegungsdatensatz aufzufassen, um diese wiederum zu überschleifen.

Ein Datensatz (Abschnitt) kann auch als eine Prozesskontur aufgefasst werden.

Eine Satzanwahl kann nicht nur auf einen Satz, sondern auf die Prozesskontur erfolgen, indem der kürzeste Weg zu der Kontur des Abschnitts gefahren wird.

Eingeschränkter Befehlsumfang innerhalb des Abschnitts: Kontrollstrukturen wie IF THEN ELSE, WHILE, REPEAT, sowie Berechnung von Punkten für Bewegungskommandos sind innerhalb des Abschnitts nicht zulässig, um eine deterministische Planung des Abschnitts zu garantieren. Insbesondere ist die Anzahl der Teilbewegungen im Abschnitt fix.

Ein Ausführungsbeispiel der Erfindung ist exemplarisch in den beigefügten schematischen Zeichnungen dargestellt. Es zeigen:
- Fig. 1: ein Flussdiagramm für ein konventionelles Pla- nungsverfahren,
- Figs. 2 und 3: Geschwindigkeitsprofile der Bewegung eines konventionellen Industrieroboters mit einer konventionellen Steuerungsvorrichtung,
- Fig. 4: einen Industrieroboter mit einer Steuerungs- vorrichtung,
- Fig. 5: ein Flussdiagramm zur Veranschaulichung des auf der Steuerungsvorrichtung des Industriero- boters der Fig. 4 laufenden Planungsverfah- rens,
- Fig. 6: veranschaulicht das Verhalten der Steuerungs- vorrichtung des Industrieroboters der Fig. 4 und
- Fig. 7: ein Geschwindigkeitsprofil der Bewegung des Industrieroboters der Fig. 4.

Die Figuren 1 bis 3 wurden bereits in der Einleitung beschrieben.

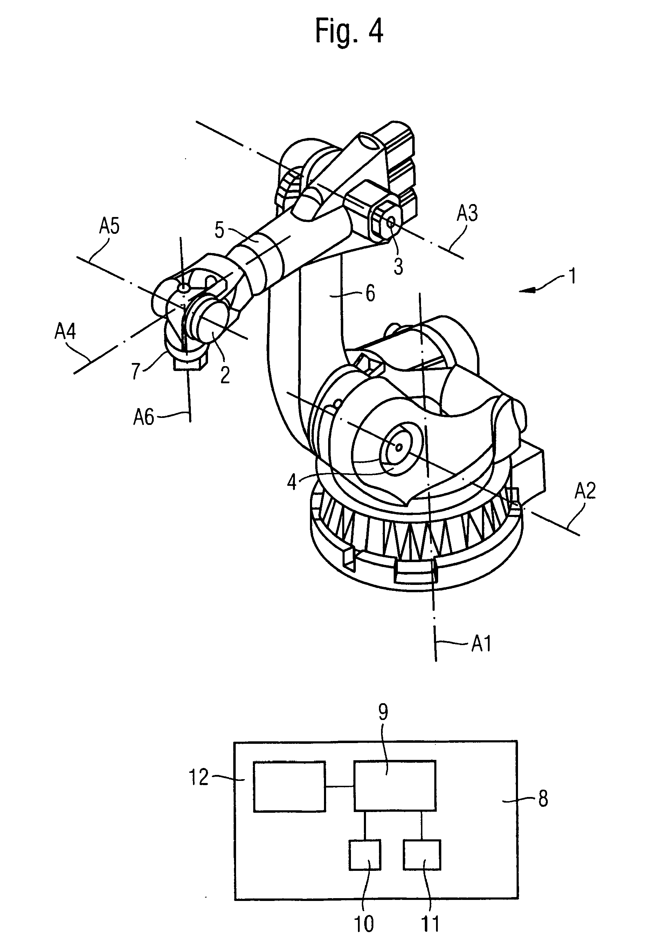

Die Fig. 4 zeigt einen Industrieroboter 1 mit einer Kinematik für Bewegungen in beispielsweise sechs Freiheitsgraden. Der Industrieroboter 1 weist in allgemein bekannter Weise Gelenke 2 bis 4, Hebel 5, 6, sechs Bewegungsachsen A1 bis A6 und einen Flansch 7 auf, an dem ein nicht näher dargestellter Effektor, z.B. ein Werkzeug, befestigt sein kann.

Jede der Bewegungsachsen A1 bis A6 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter 1 weist ferner eine Steuerungsvorrichtung, im Falle des vorliegenden Ausführungsbeispiels einen Steuerrechner 8 auf, der mit den Antrieben des Industrieroboters 1 in nicht dargestellter Weise verbunden ist und diese mittels eines auf dem Steuerrechner 8 laufenden Rechenprogramms steuert, sodass der Flansch 7 des Industrieroboters 1 eine vorgegebene Bewegung durchführt.

Der Steuerrechner 8 weist einen Speicher 12, einen mit dem Speicher verbundenen Prozessor 9, einen mit dem Prozessor 9 verbundenen Zwischenspeicher 10 und einen mit dem Prozessor verbundenen im Falle des vorliegenden Ausführungsbeispiels eine feste Länge aufweisenden Vorlaufpuffer 11 auf. Im Speicher 12 sind programmierte Punkte für eine Bahn, auf der der Industrieroboter 1 seinen Flansch 7 bzw. einen am Flansch 7 befestigten Effektor bewegen soll. Die einzelnen programmierten Punkte der Bahn wurden vorab in allgemein bekannter Weise, z.B. mittels direkter oder indirekter Programmierverfahren, ermittelt.

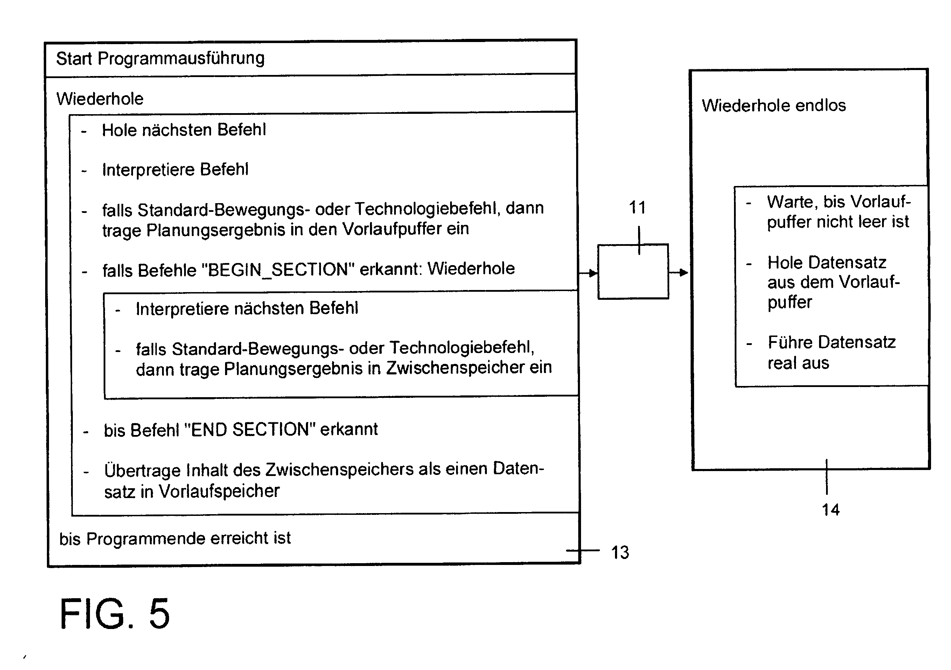

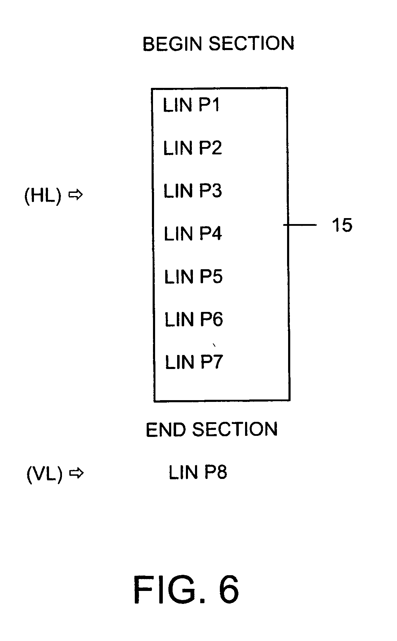

Des Weiteren läuft auf dem Steuerrechner 8 eine Rechenprogramm, das basierend auf den programmierten Punkten eine Bewegung des Industrieroboter 1 plant und aufgrund der Planung die elektrischen Antriebe derart ansteuert, so dass sich der Flansch 7 bzw. der Effektor auf der gewünschten Bahn bewegt. Das im Falle des vorliegenden Ausführungsbeispiels programmierte Planungsverfahren ist mit einem in der Fig. 5 dargestellten Flussdiagramm veranschaulicht und die Fig. 6 veranschaulicht das Verhalten des Steuerrechners 8 des Industrieroboters 1.

Im Gegensatz zu konventionellen Planungsverfahren, wie dem in der Einleitung beschriebenen Planungsverfahren, ist das auf dem Steuerrechner 8 laufende Rechenprogramm bzw. dessen Interpreter 13 derart eingerichtet, dass dieser mehrere Anweisungen, im Falle des in de Fig. 6 gezeigten Beispiels lineare Bewegungsanweisungen "LIN P1", "LIN P2", "LIN P3", "LIN P4", "LIN P5", "LIN P6" und "LIN P7", zu einem Abschnitt 15 zusammensetzt. Dieser Abschnitt 15 wird im Falle des vorliegenden Ausführungsbeispiels durch eine Klammer mit den Schlüsselworten "BEGIN SECTION" und "END SECTION" gekennzeichnet.

Im Falle des vorliegenden Ausführungsbeispiels werden nach dem Start der Planung der Bahn einzelne Bewegungs- und Technologieanweisungen aus dem Speicher 12 abgerufen und mittels des Interpreters 13 interpretiert. Sobald der Interpreter 13 der verwendeten Roboterprogrammiersprache ein Schlüsselwort, im Falle des vorliegenden Ausführungsbeispiels "BEGIN SECTION" erreicht, werden alle folgende Anweisungen bis zum nächsten Schlüsselwort, im Falle des vorliegenden Ausführungsbeispiels "END_SECTION", interpretiert.

Das Ergebnis der Interpretation der einzelnen Bewegungs- und Technologieanweisungen wird aber nicht sofort in den Vorlaufpuffer 11 des Steuerrechners 8 eingetragen, sondern in den internen Zwischenspeicher 10 des Steuerrechners 8. Der Zwischenspeicher 10 dient der Sammlung der Bewegungsanweisungen, Technologieanweisungen, Warteanweisungen, hat aber dasselbe Datenformat wie Geometrie-, Geschwindigkeits- und Technologiesätze im Vorlaufpuffer 11. Im Gegensatz zu ansonsten üblichen Geschwindigkeitsprofilen kann der Zwischenspeicher 10 auch Bereiche mit Geschwindigkeit "0" aufweisen, z.B. aufgrund von Warteanweisungen.

Sobald das Schlüsselwort "END SECTION" erreicht ist, wird der Inhalt des Zwischenspeichers 10 als ein Datensatz in den Vorlaufpuffer 11 übertragen.

Im Falle des vorliegenden Ausführungsbeispiels ist innerhalb des Abschnitts 15 nur ein reduzierter Anweisungsumfang erlaubt.

Insbesondere sind im Falle des vorliegenden Ausführungsbeispiels keine Kontrollstrukturen bzw. Kontrollanweisungen, die Endlosschleifen generieren könnten (z.B. keine rekursiven Funktionsaufrufe, nur sogenannte "FOR"-Schleifen mit festem Ende, keine "while / repeat" Schleifen) oder gar keine Kontrollstrukturen bzw. Kontrollanweisungen erlaubt. Dadurch wird verhindert, dass die Berechnung des dem Abschnitt 15 zugeordneten Datensatz eine unendliche Zeitdauer erfordert.

Ferner sind im Falle des vorliegenden Ausführungsbeispiels keine sensorgeführten Bewegungen oder keine Anweisungen, die eine zeitlich unbestimmte Dauer aufweisen, wie beispielsweise Warteanweisungen, aufgrund derer der Interpreter 13 wartet, bis ein entsprechendes Signal gesetzt ist, erlaubt.

Im Falle des vorliegenden Ausführungsbeispiels ist aber die Interpretation zumindest folgender Anweisungen innerhalb des Abschnitts 15 möglich:
1. Bewegungsanweisungen, wie beispielsweise Punkt zu Punkt (PTP) Bewegung, lineare (LIN) Bewegungsanweisung, Kreisbogenbewegung) CIRC, oder SPLINE-Anweisungen,
2. Technologieanweisungen, d.h. das eventuelle bahnbezogene Setzen und/oder Löschen von analogen und digitalen Ausgängen, geschwindigkeitsproportionale Analogausgabe, geometrisches oder thermisches Pendeln, und
3. zeitlich spezifizierte Warteanweisungen.

Des Weiteren ist innerhalb des Abschnitts 15 keine Schachtelung von Abschnitten erlaubt.

Die im Abschnitt 15 zusammengefassten Anweisungen ergeben im Falle des vorliegenden Ausführungsbeispiels die gesamte Kontur, auf der sich der Industrieroboter 1 bewegen soll oder zumindest einen Teilabschnitt der Gesamtkontur.

Aus Sicherheitsgründen ist es in der Regel notwendig, dass aufgrund einer Bewegungsplanung nur Bewegungen erzeugt werden, die auf dem geplanten Restweg, also dem Teil der Bahn, auf der sich der Industrieroboter 1 noch bewegen soll, zum nächsten Genauhalt zum Halt kommen können, da z.B. eine Notaus-Reaktion erforderlich sein könnte bzw. keine weiteren Bewegungen mehr folgen könnten. Die maximale Geschwindigkeit der Bewegung des Industrieroboters 1 ist also über die im Vorlauf verfügbare Vorschau an Restweg beschränkt.

Die Fig. 2 zeigt dieses Verhalten für das in der Einleitung bereits beschrieben konventionelle Verfahren anhand des Geschwindigkeitsprofils PR1: Immer wenn der Vorlauf einen weiteren Einzeldatensatz geplant und damit den sichtbaren Restweg verlängert hat, kann die Geschwindigkeit in der Planung erhöht werden. Diese höhere Geschwindigkeit ist aber abhängig von der Prozessorauslastung der Steuervorrichtung.

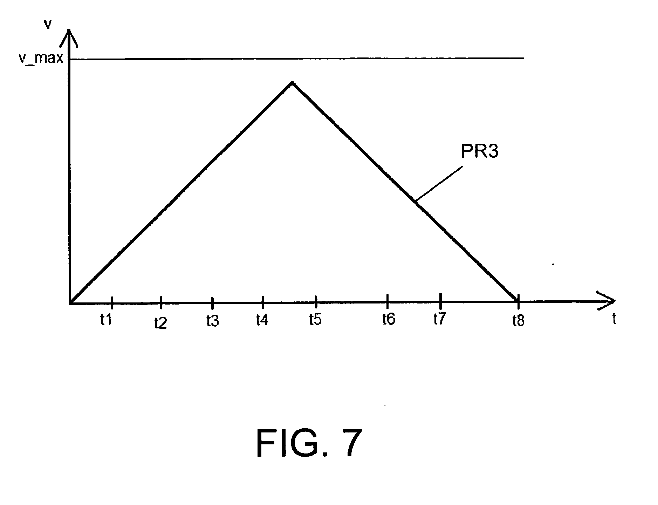

Mittels der auf dem Steuerrechner 8 des Industrieroboters 1 Planung wird der Planung der Bewegung auf einfache Weise ein längerer Prozessweg als eine Einheit mitgeteilt, so dass die maximale, auf diesem Gesamtweg zulässige Geschwindigkeit geplant werden kann. Dies ist mit einem in der Fig. 7 dargestellten Geschwindigkeitsprofil PR 3 verdeutlicht.

## Patentansprüche

1. Verfahren zum Steuern der Bewegung eines Industrieroboters, aufweisend folgende Verfahrensschritte:
a) Abfragen einer für die Steuerung eines Industrieroboters (1) vorgesehenen Anweisung,
b) Erzeugen einer interpretierten Anweisung durch Interpretieren der abgefragten Anweisung mittels eines Interpreters (13),
c) Speichern der interpretierten Anweisung in einen Zwischenspeicher (10), wobei das Speichern der interpretierten Anweisung angefangen wird, wenn ein Schlüsselwort entdeckt wurde,
d) Wiederholen der Schritte a) bis c) bis ein weiteres Schlüsselwort entdeckt wird,
e) Erzeugen eines Datensatzes (15) aus den im Zwischenspeicher (10) gespeicherten interpretierten Anweisungen, wobei der Datensatz (15) eine Information über zumindest eine Teilbahn einer Bahn aufweist, auf der sich der Industrieroboter (1) bewegen soll, und für den Datensatz nur Anweisungen mit einem reduzierten Befehlssatz verwendet werden, der keine Kontrollstrukturen umfasst.
f) Laden des Datensatzes (15) in einen Pufferspeicher (11) und
g) Abfragen des im Pufferspeicher (11) gespeicherten Datensatzes und Interpolieren des aus dem Pufferspeicher (11) abgefragten Datensatzes mittels eines Interpolators (14), um den Industrieroboter (1) auf der Teilbahn zu bewegen.

2. Verfahren nach Anspruch 1, bei dem der Datensatz keine Endlosschleifen erzeugende Kontrollstrukturen, keine zeitlich unbestimmte Dauern aufweisende Anweisungen und keine sensorgeführten Anweisungen umfasst.

3. Verfahren nach Anspruch 1 oder 2, bei dem der Datensatz wenigstens Bewegungsanweisungen, Technologieanweisungen und zeitlich spezifizierte Warteanweisungen aufweist.

4. Verfahren nach einem der Ansprüche 1 bis 3, bei dem der Datensatz frei von einer Schachtelung von Abschnitten ist.

5. Verfahren nach einem der Ansprüche 1 bis 4, bei dem der Datensatz eine Information über die gesamte Bahn umfasst.

6. Verfahren nach einem der Ansprüche 1 bis 5, zusätzlich aufweisend Wiederholen der Schritte a) bis g) um einen weiteren Datensatz zu Erzeugen, der eine Information über eine weitere Teilbahn der Bahn umfasst, wobei die weitere Teilbahn der Teilbahn nachfolgt.

7. Verfahren nach Anspruch 6, aufweisend Überschleifen des Datensatzes und des weiteren Datensatzes.

8. Verfahren nach einem der Ansprüche 1 bis 7, bei dem der Datensatz mehrere überschliffene interpretierte Anweisungen und/oder Spline-Anweisungen aufweist.

9. Verfahren nach einem der Ansprüche 1 bis 8, bei dem der Datensatz (15) aufgrund der im Zwischenspeicher (10) gespeicherten interpretierten Anweisungen eine Information über eine ortsabhängige Geschwindigkeit aufweist, mit der sich der Industrieroboter (1) auf der dem Datensatz (15) zugeordneten Teilbahn bewegen soll, und/oder bei dem der Datensatz (15) aufgrund der im Zwischenspeicher (10) gespeicherten interpretierten Anweisungen eine Information über eine zeitbasierte Bewegung ausweist, mit der sich der Industrieroboter (1) auf der dem Datensatz (15) zugeordneten Teilbahn bewegen soll.

10. Computerprogrammprodukt, das direkt in einen Speicher einer Steuerungsvorrichtung (8) eines Industrieroboters (1) ladbar ist und eines Softwarecode aufweist, mit dem das Verfahren nach einem der Ansprüche 1 bis 9 ausgeführt wird, wenn das Computerprogrammprodukt auf der Steuerungsvorrichtung (8) des Industrieroboters (1) läuft.

11. Industrieroboter mit einer Steuerungsvorrichtung (8), die das Verfahren nach einem der Ansprüche 1 bis 9 ausführt.

## Claims

1. Method for controlling the movement of an industrial robot comprising the following method steps:
a) checking an instruction provided for controlling an industrial robot (1),
b) producing an interpreted instruction by interpreting the checked instruction by means of an interpreter (13),
c) saving the interpreted instruction in a buffer memory (10), where the saving of the interpreted instruction is started once a keyword has been detected,
d) repeating steps a) to c) until an additional keyword is detected,
e) producing a dataset (15) from the interpreted instructions saved in the buffer memory (10), wherein the dataset (15) includes information relating to at least a partial section of a path on which the industrial robot (1) is intended to move, and only instructions with a reduced command set are used for the dataset, which command set does not include control structures,
f) loading the dataset (15) into a buffer memory (11) and
g) checking the dataset saved in the buffer memory (11) and interpolating the checked dataset from the buffer memory (11) by means of an interpolator (14), in order to move the industrial robot (1) on the partial section.

2. Method according to claim 1, in which the dataset does not include any control structures which produce infinite loops, nor any instructions including unspecific time periods, nor any sensor-guided instructions.

3. Method according to claim 1 or 2, in which the dataset includes at least movement instructions, technological instructions and time-specific maintenance instructions.

4. Method according to one of claims 1 to 3, in which the dataset does not include any nested sections.

5. Method according to one of claims 1 to 4, in which the dataset includes information relating to the entire path.

6. Method according to one of claims 1 to 5, additionally comprising repeating the steps a) to g) in order to produce an additional dataset, which includes information about an additional partial section of the path, wherein the additional partial section follows the partial section.

7. Method according to claim 6, comprising blending the dataset and the additional dataset.

8. Method according to one of claims 1 to 7, in which the dataset comprises several blended interpreted instructions and/or spline instructions.

9. Method according to one of claims 1 to 8, in which the dataset (15) owing to the interpreted instructions saved in the buffer memory (10) includes information relating to a location-dependent speed, at which the industrial robot (1) is intended to move on the partial section assigned to the dataset (15), and/or in which owing to the interpreted instructions saved in the buffer memory (10) the dataset (15) includes information relating to a time-based movement, with which the industrial robot (1) is intended to move on the partial section assigned to the dataset (15).

10. Computer program product, which can be loaded directly into a memory of a control device (8) of an industrial robot (1) and comprises a software code, by means of which the method according to one of claims 1 to 9 is executed, when the computer program product runs on the control device (8) of the industrial robot (1).

11. Industrial robot comprising a control device (8), which executes the method according to one of claims 1 to 9.

## Revendications

1. Procédé de commande du mouvement d'un robot industriel, présentant les étapes de procédé suivantes :
a) interroger une instruction prévue pour la commande d'un robot industriel (1),
b) engendrer une instruction interprétée par interprétation de l'instruction interrogée au moyen d'un interpréteur (13),
c) mémoriser l'instruction interprétée dans une mémoire temporaire (10), la mémorisation de l'instruction interprétée étant commencée lorsqu'un mot-clé a été détecté,
d) répéter les étapes a) à c) jusqu'à ce qu'un autre mot-clé soit détecté,
e) engendrer un enregistrement de données (15) parmi les instructions interprétées mémorisées dans la mémoire temporaire (10), l'enregistrement de données (15) présentant une information sur au moins une trajectoire partielle d'une trajectoire sur laquelle le robot industriel (1) doit se déplacer, et pour l'enregistrement de données, on utilise seulement des instructions avec un répertoire réduit d'instructions qui ne comprend aucune structure de contrôle,
f) charger l'enregistrement de données (15) dans une mémoire tampon (11) et
g) interroger l'enregistrement de données mémorisé dans la mémoire tampon (11) et interpoler l'enregistrement de données interrogé de la mémoire tampon (11) au moyen d'un interpolateur (14) pour déplacer le robot industriel (1) sur la trajectoire partielle.

2. Procédé selon la revendication 1, dans lequel l'enregistrement de données ne comprend aucune structure de contrôle engendrant des boucles infinies, aucune instruction présentant des durées indéterminées dans le temps et aucune instruction guidée par capteur.

3. Procédé selon la revendication 1 ou 2, dans lequel l'enregistrement de données présente au moins des instructions de mouvement, des instructions de technologie et des instructions d'attente spécifiées dans le temps.

4. Procédé selon l'une des revendications 1 à 3, dans lequel l'enregistrement de données est exempt d'une imbrication de sections.

5. Procédé selon l'une des revendications 1 à 4, dans lequel l'enregistrement de données comprend une information sur toute la trajectoire.

6. Procédé selon l'une des revendications 1 à 5, présentant une répétition des étapes a) à g) pour engendrer un nouvel enregistrement de données qui comprend une information sur une autre trajectoire partielle de la trajectoire, l'autre trajectoire partielle suivant la trajectoire partielle.

7. Procédé selon la revendication 6, présentant un lissage de l'enregistrement de données et de l'autre enregistrement de données.

8. Procédé selon l'une des revendications 1 à 7, dans lequel l'enregistrement de données présente plusieurs instructions interprétées lissées et/ou des instructions spline.

9. Procédé selon l'une des revendications 1 à 8, dans lequel en raison des instructions interprétées mémorisées dans la mémoire temporaire (10), l'enregistrement de données (15) présente une information sur la vitesse en fonction de la position, avec laquelle le robot industriel (1) doit se déplacer sur la trajectoire partielle associée à l'enregistrement de données (15), et/ou dans lequel en raison des instructions interprétées mémorisées dans la mémoire temporaire (10), l'enregistrement de données (15) présente une information sur la vitesse basée sur le temps avec laquelle le robot industriel (1) doit se déplacer sur la trajectoire partielle associée à l'enregistrement de données (15).

10. Produit programme d'ordinateur qui peut être chargé directement dans une mémoire d'un dispositif de commande (8) d'un robot industriel (1) et qui présente un code de logiciel avec lequel le procédé selon l'une des revendications 1 à 9 est mis en oeuvre lorsque le produit programme d'ordinateur marche sur le dispositif de commande (8) du robot industriel (1).

11. Robot industriel présentant un dispositif de commande (8) qui met en oeuvre le procédé selon l'une des revendications 1 à 9.
